# EUROPEAN PATENT SPECIFICATION

(11) **EP 1 704 829 B1**
(45) Date of publication and mention of the grant of the patent: **05.11.2014**
(21) Application number: 05006115.9
(22) Date of filing: 21.03.2005
(51) Int. Cl.: A61C 8/00, A61C 13/00

(54) **Abutment set for a dental implant and method of manufacturing a dental prosthesis**
Abutmenset für ein Zahnimplantat und Herstellungsverfahren einer Zahnprothese
Set de butées pour un implant dentaire et méthode de fabrication d'une prothèse dentaire

(43) Date of publication of application: 27.09.2006
(73) Proprietor: Dentsply Implants Manufacturing GmbH, 68229 Mannheim (DE)
(72) Inventor: Groll, Werner, Dr., 63755 Alzenau (DE); Wolf, Dietrich, Dr.,, 69123 Heidelberg (DE); Lange, Thomas, 63505 Langenselbold (DE)
(74) Representative: Lüdcke, Joachim Moritz

(56) References cited:
- WO-A-01/97706
- WO-A-03/105710
- WO-A-2004/054464
- US-A- 4 575 340
- US-A1- 2002 177 106
- US-A1- 2004 096 804
- US-A1- 2005 014 108

## Description

### Introduction and Background

The invention relates to an implant-supported dental prosthesis, particularly an abutment set for a dental implant and a method for manufacturing a dental prosthesis.

Enossal implants, provided with an abutment or construction post, are increasingly employed for anchoring dental prostheses. The use of conical posts which are inserted with a conical section in a positive-locking and frictional manner into a corresponding conical hole of the implant and are secured by means of a central screw, as known for instance from EP 0 707 835 A1, has the advantage over other geometrically interlocked types of connection that a high position stability under load is ensured and a rotational alignment in any desired position is possible. The latter is particularly advantageous in the case of construction posts on which the occlusal construction peg provided for connection with the dental prosthesis is angled. Furthermore, the conical connection between the enossal implant and the construction post is free from gaps and bacteria-tight.

General requirements for such connections are the absorption and transfer of high masticatory forces at minimum geometrical dimensions and a connection between the implant components being free from play and as impervious to bacteria as possible. Such connections for metal two phase implants are further known from the prior art, for instance, one connection based on a cone is known from US 4,772,204 A corresponding to WO 85/02337 and US 5,674,072 corresponding to EP 0 707 835 A1.

Anatomical, biomechanical and aesthetic aspects particularly for single tooth dental prostheses typically require the use of a mechanical connection between the implant components omitting any rotation or move between the components. Not only in case where the mentioned requirements necessitates the use of a mechanical connection having an angle between the part anchored in the bone and the part carrying the dental structure which projects into the mouth cavity due to the individual conditions of teeth arrangement in the mouth of the patient, esthetical and functional performance typically require exact rotational positioning of the components to each other even where the axis of the components are aligned to each other. An alternative to the cone fitting mentioned above is a set of dental implant components having positive joints, such as true-fitting hexagonal or octagonal geometries which allow rotational positioning of both components relative to each other in predetermined positions. Such positive joints are described in US 5,199,873 A1 corresponding to EP 0 438 048, US 5,125,840 and others.

Although these connections providing the advantage that the adjustment work in the mouth of the patient is much less than that of a cone fitting, the positive joint connections have the disadvantage that the rotational position is defined in steps and prevents rotation of position, as the component inserted into the bone and becoming firmly anchored there after the healing-in phase predetermines the final position of the support projecting into the mouth to which a dental prosthesis is applied.

For the construction of implant-supported dental bridge prostheses, the conical crown technique is a proven method. In this, an occlusal conical peg is provided on each abutment post, serving as the force-transmitting connection with the dental prosthesis.

In dental practice, an impression is usually taken, by which the position of all the conical pegs is determined. The dental technician produces an analogous model from this impression in the laboratory. The dental technician models a primary crown in wax on the conical peg and pre-mills it in the corresponding conical angle with the aid of a milling unit. The primary crown is then pegged and embedded; it is cast, removed from the embedding material, blasted and fitted. The primary crown is after-milled and polished. A secondary crown is produced on the primary crown with modelling plastic and wax, in particular as a facing bridge, as caps without retention for gluing in a metal frame or as a cap with retention for incorporating into prostheses. The secondary crown is pegged and embedded; it is cast, removed from the embedding material, blasted and fitted.

This production requires a considerable outlay on work in the dental laboratory and in the dental practice; several visits to the dentist by the patient are necessary.

From US 2002/0177106 A1 and DE 199 45 354 C2 an implant-supported dental prosthesis of the above-mentioned type is known that can be processed in a finished form directly in the mouth of the patient without taking impressions, producing models and milling and casting in the dental laboratory. According to CA 2,319,946 this is achieved in that several conical caps are embedded in the main body of the dental prosthesis, each of which has a conical hole matching in shape the conical peg assigned to it. The use of embedded conical caps as connecting elements between the conical pegs of the construction posts and the dental prosthesis enables the dental prosthesis to be completed in a single session with prefabricated components and in particular without taking impressions and producing models beforehand, by joining the conical caps in their position located on the conical pegs with the main body of the prosthesis by conventional techniques, in particular by gluing or polymerizing-in. In particular, the need to model a primary crown on the conical peg of the construction post and to produce and work it is eliminated. As a result, any need to carry out any further work in the dental laboratory after production of the actual dental prosthesis and fitting in the dental practice is eliminated. Any taking of impressions and production of models is eliminated.

By the use of exclusively prefabricated components, the disadvantages and difficulties resulting from the expansion properties of embedding compositions are eliminated. The expensive modelling of primary and secondary components is eliminated, as is the time-consuming development of the secondary components. Casting errors are avoided. With the relatively small amount of materials employed, the amount of consumable materials is likewise reduced. The accuracy of fit achieved is consistently high.

Optimum alignment of the conical peg is achieved by the free positioning of straight and angled construction posts in the conical hole of the implant. Retention projections which allow an increased anchoring of the conical caps in the main body of the dental prosthesis are preferably provided on the outside of the conical caps. These can be, for example, circumferential bulges.

The process suggested by this prior art comprises the use of prefabricated conical caps as connecting elements, wherein the main body of the dental prosthesis, in the region in each case of a construction peg, has a basal recess which has a lateral filling opening provided, in that on each conical peg of the construction posts in each case a conical cap which matches this is mounted, in that the dental prosthesis is inserted into the mouth such that each conical cap projects into a basal recess, and in that each basal recess is filled with self-curing plastic through the lateral filling opening, and after curing thereof the dental prosthesis is removed and finished.

The prepared dental prosthesis is therefore inserted and completed in a single session in the dental practice exclusively using prefabricated components, without further working steps in the dental laboratory being necessary. The patient can therefore leave the dental practice with the completed dental prosthesis directly after insertion of the dental prosthesis.

However, the implant supported dental prosthesis and process suggested is generally directed to the mechanical fixing of a multi-teeth prosthesis on a multiplicity of dental implants, like a bridge prosthesis, that is, each single implant abutment arrangement must not require a specific rotational relation to the bridge implant, as the rotational fixing of the implant is performed by the multiplicity of fixing joints.

Further, the prefabricated components of the implant supported dental prosthesis and process suggested are produced and selected for size fitting purposes only.

US-A-4,575,340 discloses a prefabricated abutment as the supragingival part of an endodontic post or an implant in the form of a sleeve-like coping which is telescopically mated to the post for receiving a crown. More specifically, the document discloses a post as a peg being placed with its subgingival portion in the root canal of a tooth, or forming a screw type or blade implant to be supported by the patient's jawbone. A set of posts with different external sizes, shapes and dimensions is proposed together with a corresponding set of coping sleeves having appropriate internal sizes, shapes and dimensions. A restoration of a tooth may be supported on the sleeve, or the restoration is proposed to incorporate a faithful replica of that sleeve's internal size, shape and dimensions. The sleeve may be secured against removal or shifting by various means including an arrangement of an inner sleeve and an coaxial outer sleeve which can be rotated with respect to each other, so that a bayonet type securing means can be activated by a suitable key through the restoration and an opening in the sleeve.

(US 2004/0096804 A1) describes and assembly for handling a dental implant. The assembly proposed consists of a dental implant of the screw type form and a transfer cap which can be fitted onto the implant in a releasable manner and an adapter element which engages on the implant with a form fit and is inserted into the implant through an opening in the cap. The adapter provides for the possibility to screw in the implant by way of a wrench or other suitable tool. Further disclosed are storing boxes proposed to ease the handling of such an assembly. The assembly is adapted such that the release force for the connection between the implant and the cap is greater than that of the adapter within the cap so that the adapter may be removed from the implant while the cap remains on the implant.

WO 2004/054464 describes an abutment and a dental implant of the conventional known art. Sets of different implants and abutments are proposed. From the available set, the dentist selects one he believes closest fitting. The abutment will then be individually machined to adapt the abutment to the anatomic situation in the mouth of the patient prior to preparing a crown or the like.

US 20050014108 discloses an abutment set for a dental implant according to the preamble of claim 1.

### Summary of the Invention

It is therefore an object of the invention to provide an improved dental abutment set for a dental implant according to claim 1 with economically improved manufacturing of dental prostheses according to claim 8 also for single tooth prostheses using prefabricated components.

Providing various prefabricated components for single tooth prostheses has been directed in the past to meet different sizes of components as well as different geometrical arrangements, like angled abutment posts, to meet respective size and orientation requirements according to the dental situation of the patient to be treated.

Applicants found out that a large step forward to an inexpensive high quality single tooth prosthesis can be achieved by providing an anatomically pre-configured abutment set for a dental implant prefabricated such that today's typical trimming for individualization of the abutment by the dental laboratory can be omitted.

This and other objects are achieved by an abutment set for a dental implant comprising an abutment post for fixing to a dental implant, which abutment post is anatomically pre-configured, and an abutment cap, which cap is an anatomically pre-configured and adapted for mounting onto said abutment post without further machining by the customer, wherein the abutment post is adapted for fixing to a dental implant and for receiving said abutment cap without further machining by the customer, and the abutment cap is adapted to receiving a veneering, and the abutment cap and the abutment post being pre-fabricated for providing appropriate dental prostheses for a multiplicity of different patients.

The abutment set according to the invention reduces the workload for the dental laboratory when preparing state of the art dental prosthesis, focusing the work of the dental laboratory to the modeling and fixing of the veneering. Thus, the over all costs for obtaining a dental prosthesis can be significantly reduced and the quality standard of a dental implant can be improved.

Further, applicants found out that providing means for defined rotational and lateral fixing in impression material applied by a dentist to the abutment cap allows the use of a single cap both taking an impression of the teeth arrangement inside the mouth of a patient and as a base for the veneering does not only additionally reduce the costs, but significantly improves the long term quality of the prosthesis because the prosthesis will fit the same way and orientation as the cap did during taking of the impression.

According to the invention the means for defined rotational and lateral fixing in impression material applied by a dentist the abutment cap has at least one protrusion, located generally opposite to the connecting portion of the cap for cementing onto the abutment post, the protrusion being totally or partially removable by cutting, grinding or breaking prior to receiving the veneering. This ensures most properly exact reposition of the abutment cap once fitted with the veneering compared to the orientation when taking the impression inside the patient's mouth by the dentist, and easy handling by the laboratory. By adjusting the occlusal length of the cap when removing the protrusion the customer may optimize the mechanical support of the veneering and the optical properties of the dental prosthesis.

To reduce the necessity of mechanical adjustment work inside the patient's mouth it is preferred that the abutment cap and the abutment post having functional surface elements for providing a predetermined rotational orientation relative to each other.

In a most preferred embodiment of the invention the abutment cap is characterized in that the anatomically pre-configuration of the cap comprises a bottom rim section surrounding the connecting portion, the shape of the rim section being adapted to the natural gingival contour, whilst the prior art generally prefers rotational symmetry of the bottom rim section of a cap to ease handling and storing of impression and construction caps. The embodiment according to the invention provides best esthetical results for the dental prosthesis as the prosthesis fits in the gingival situation of the patient's mouth like a natural tooth, and avoids that the dental implant can be seen from outside. On the other hand this is achieved without a need for trimming by the dental laboratory when preparing the prosthesis, thus further reducing the costs for the prosthesis while improving the quality of the result at the same time.

Present prefabricated dental prosthesis components are generally made of metal, usually titanium alloys or gold or gold based alloys, to ease appropriate trimming by the dental laboratory by machining the components. With the present invention the need for machining the prefabricated components can be minimized, if not omitted. Preferably, the abutment set according to the invention is characterized in that the abutment post and/or the abutment cap is made of ceramics, preferably a ceramic material comprising zirconium oxide and/or aluminum oxide. This enables the dentist and the patient to make use of the specific advantages both of prefabricated components and ceramics material, particularly with respect to patients suffering from metal alloy incompatibility. Further the long term stability of the prosthesis is improved as matching of the thermal expansion coefficient can easily be obtained, reducing the risk of cracks and the like.

In a particularly preferred embodiment of the abutment set according to the invention the abutment post has a portion for receiving the abutment cap, wherein the surface of said portion having a preconditioned surface generally ready for receiving cementum or adhesive for mechanical fixing of the abutment cap. This allows to reduce preparation work like blasting to what is needed for cleaning the post as required.

In a further particularly preferred embodiment of the abutment set according to the invention the abutment cap has a connecting portion for cementing onto the abutment post, wherein the surface of said connecting portion is a preconditioned surface generally ready for receiving cementum or adhesive for rigid mechanical fixing to the abutment post.

The esthetical wishes of the patients are met by an appropriate veneering adapted to the surrounding teeth situation in the patient's mouth. Therefore it is preferred that the abutment cap has a receiving portion for receiving the veneering, wherein the said receiving portion has a preconditioned surface generally ready for receiving the veneering in a rigid mechanical fixing configuration.

This and other objects are also achieved by a dental prosthesis comprising an abutment post and an abutment cap according to what is described above.

This and other objects are also achieved by a method for manufacturing a dental prosthesis for mounting on a dental implant, comprising the steps of selecting a set of pre-fabricated abutment post and abutment cap, obtaining an impression of the abutment post and abutment cap removably fixed to said implant within the dental arrangement inside the mouth of the patient, and adding a veneering to the abutment cap, without further machining of the abutment cap and the abutment post for mounting said abutment cap to said abutment post.

It is mostly preferred that the selection step is selecting an abutment post and an abutment cap according to what is described above.

In a further preferred embodiment the method according to the invention further includes the step of removing the abutment cap from the impression, partially or totally removing a protrusion for rotational and lateral fixing of the abutment cap to the impression, if any, prior to adding the veneering to the abutment cap.

Preferably, the method according to the invention further comprises the step of mounting the abutment post to the dental implant and cementing the abutment cap carrying the veneering to the abutment post.

The invention may be put into effect most effectively by treating a human or animal being with a dental prosthesis as described above.

### Brief Description of the Drawings

An exemplary embodiment of the invention is shown in the attached drawings and is described in more detail below. In the drawings:
Fig. 1 is a cross sectional side view of a general arrangement of a dental implant, and an abutment set comprising an abutment post and a cap mounted thereon;
Figs. 2 and 7 are perspective views of an abutment cap according to the invention;
Fig. 3 is a partially cut-out perspective view of an abutment set according to the invention;
Figs. 4 and 5 are cross sectional views of the cap of Figs. 2 and 7, in perpendicular planes;
Fig. 6 is a top view of the cap of Figs. 2 to 5 and 7; and
Fig. 8 is a cross sectional view as in Fig. 4, showing the cap in a state with removed protrusion and a schematically representation of a veneering in dotted lines.

### Detailed Description of the Invention

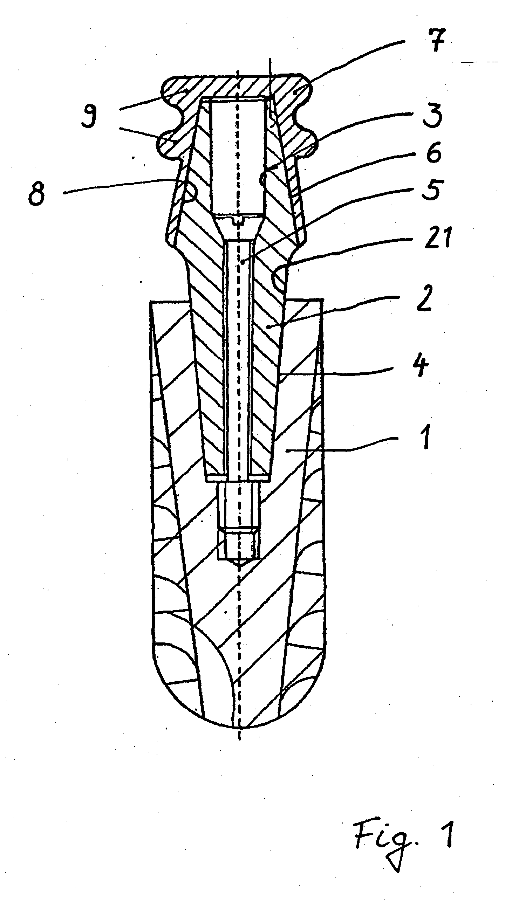

Fig. 1 shows a general arrangement of a dental implant 1, and an abutment set comprising an abutment post 2 and a cap 7 mounted thereon. The enossal dental implant 1 is intended to be screwed into a prepared threaded hole in a jaw bone (not shown). After the implant 1 has been introduced by the dentist into the jaw bone of a patient and has healed in, a construction or abutment post 2, for instance with a conical peg 21 on the implant side, is inserted into a corresponding conical hole 4 of the implant 1 and secured by means of a central screw 5 through central hole 3.

The abutment cap 7 is then mounted on the abutment post 2 which typically has a conical peg 6 on its occlusal end projecting out of the implant 1. In the completed state, i.e. after connecting to the dental prosthesis, the conical peg 6 carries the abutment cap 7, which may have a conical hole and/or a positive rotational fit means 8, which matches in respect of its shape, in particular its diameter and the angle of taper, the conical peg 6. The angle of taper of the conical peg 6 to the central axis of the cone 6 and of the conical hole 8 is preferably in the range from 4 degrees to 8 degrees and may be, for example, about 6 degrees. The positive rotational fit means may be obtained by a non-circular cross section of the hole 8 of the cap 7 corresponding to a non-circular cross section of the peg 6.

On its outside the conical cap 7 may have circumferential bulges 9 as retention projections which serve to anchor the conical cap after its embedding in plastic material for taking an impression of the dental arrangement inside the mouth cavity of a patient.

Whilst the abutment post 2 is shown as a straight, i.e. not angled, construction post 2, an angled and anatomically preconfigured construction post 2 is preferred, which may be is first aligned in an optimum manner with the implant 1 in respect of the given insertion direction and then fixed in its rotational position.

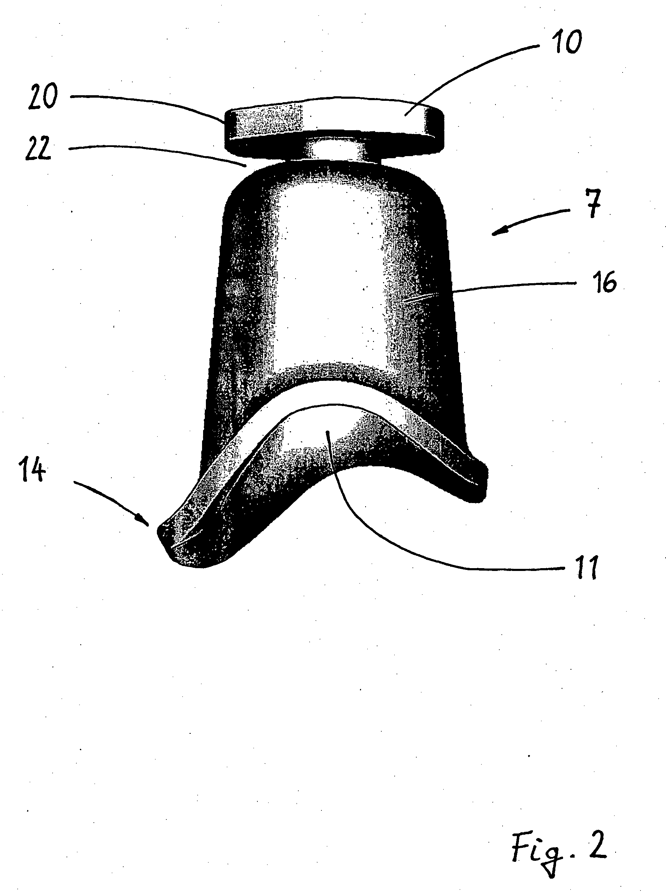

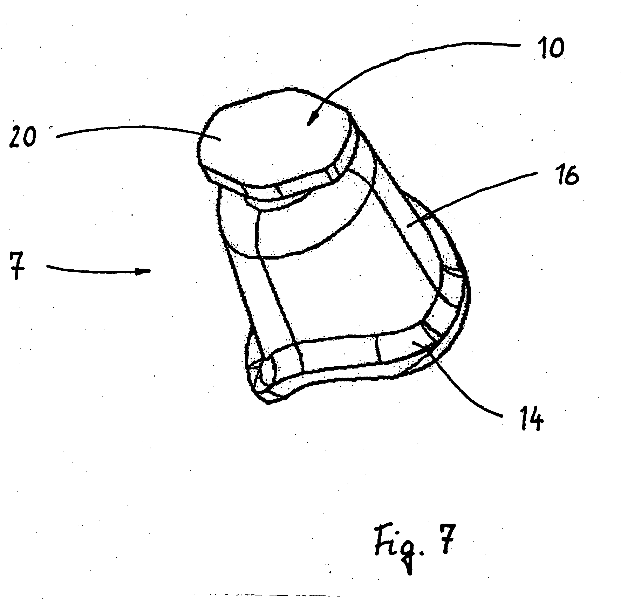

The embodiment of an abutment cap 7 according to the invention as shown in Figs. 2 and 7 comprises means for defined rotational and lateral fixing in impression material applied by a dentist to the abutment cap when taking an impression of the teeth arrangement inside the mouth of a patient preferably in the form of at least one protrusion 10, located generally opposite to the connecting portion 11 of the cap 7 for cementing the cap 7 onto the abutment post 2. Such a configuration allows the use of a single cap 7 both for taking an impression and as a base for a veneering 12 later on by a dental laboratory.

Present prefabricated dental prosthesis components are generally made of metal, usually titanium alloys or gold or gold based alloys, to ease appropriate trimming by the dental laboratory by machining the components to obtain the desired shape for preparing a dental prosthesis fitting into the dental arrangement of a patient.

According to the present invention the components of the abutment set comprising a post 2 and a cap 7 are anatomically preconfigured and adapted to fit to each other without further machining by the customer, i.e. a dental laboratory preparing the dental prosthesis. Therefore the need for machining the prefabricated components can be minimized, if not omitted.

Preferably, the abutment post 2 and the abutment cap 7 of the abutment set according to the invention are made of a ceramic material comprising zirconium oxide and/or aluminum oxide. This enables the dentist and the patient to make use of the specific advantages both of prefabricated components and ceramics material, particularly with respect to patients suffering from metal alloy incompatibility. Further the long term stability of the prosthesis is improved as matching of the thermal expansion coefficient can easily be obtained, reducing the risk of cracks and the like.

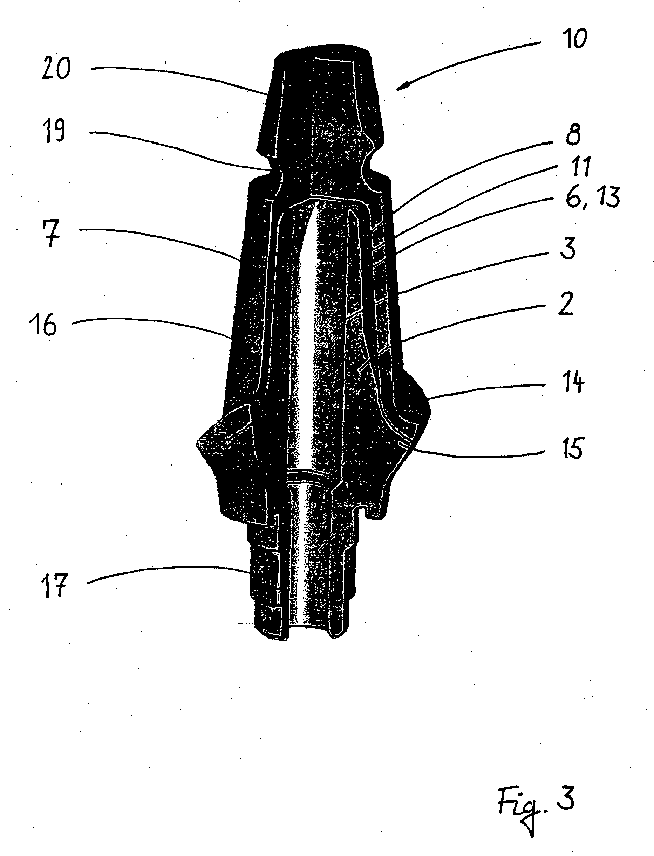

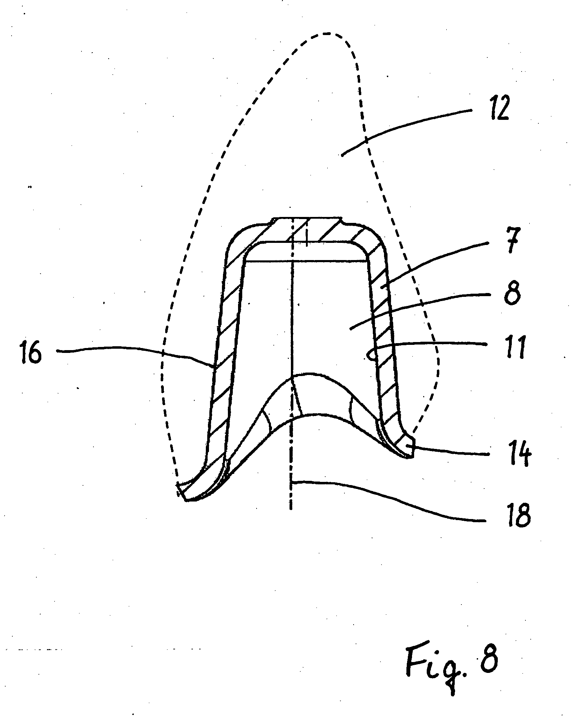

The protrusion 10 is partially or totally removable from the cap 7 by cutting, grinding or breaking prior to receiving the veneering 12. This ensures most properly exact reposition of the abutment cap 7 once fitted with the veneering 12 compared to the orientation when taking the impression inside the patient's mouth by the dentist, and easy handling by the laboratory. When removing the protrusion 10 the dental technician may adjust the occlusal length of the cap. This allows him to optimize mechanical support for the veneering 12 against occlusal forces on the one hand and optical properties of the prosthesis on the other hand, particularly with an embodiment of the invention as shown in Fig. 3. An arrangement of the cap 7 with totally removed protrusion 10 is shown in Fig. 8 with a veneering 12 adapted to the anatomy of the patient being illustrated in dotted lines.

The protrusion 10 may be of fungiform or hammerhead shape with a space 22 between a head section 20 and the body of the cap 7 so as to receive sufficient impression material lateral fixing of the cap 7 in the impression material applied by a dentist when taking an impression of the teeth arrangement inside the mouth cavity of a patient. A defined rotational fixing of the cap 7 in the impression material is obtained by non-circular shape of the head section 20 and its different extension in two directions in a plane generally perpendicular to the longitudinal axis 18 of the cap 7.

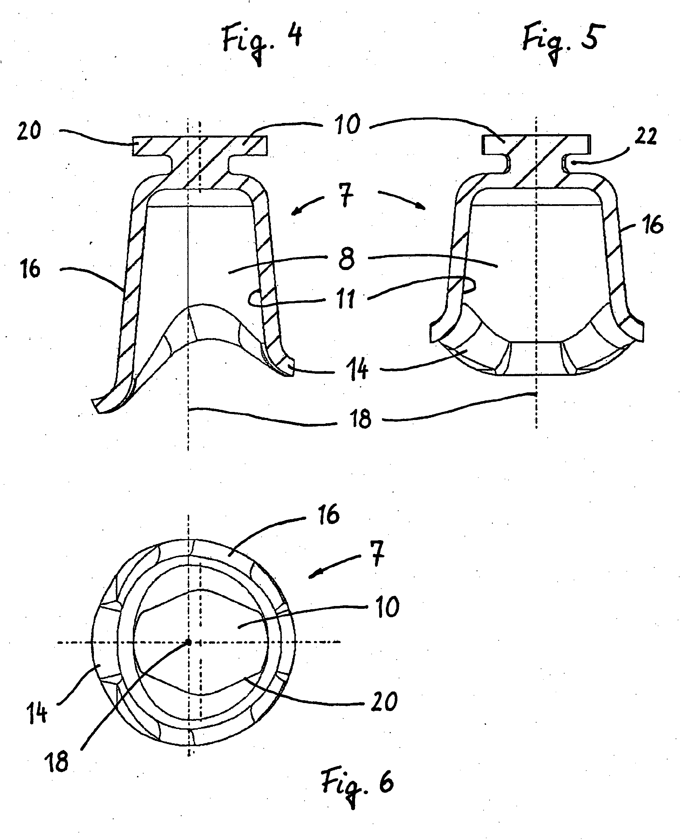

To reduce the necessity of mechanical adjustment work inside the patient's mouth it is preferred that the abutment cap 7 and the abutment post 2 having functional surface elements for providing a predetermined rotational orientation relative to each other. This can be obtained for example by a positive rotational fit between the cap 7 and the post 2, which may be in the form of a non-circular cross section of the hole 8 inside the cap 7 and a corresponding non circular cross section of a portion 13 of the post 2 for receiving the abutment cap 7, as can be seen from Figs. 4 to 6.

Alternatively or additionally such positive rotational fit between the cap 7 and the post 2 may be obtained by the shape of a bottom rim section 14 of the cap 7 and a correspondingly shaped collar 15 of the abutment post 2 as can be seen from Fig. 3. The rim section 14 is part of the anatomically pre-configuration of the cap 7, as can be seen particularly good in Figs. 2 and 7. The bottom rim section 14 surrounds the connecting portion 11 of the cap 7. The shape of the rim section 14 is adapted to the natural gingival contour. The embodiment according to the invention provides best esthetical results for the dental prosthesis as the prosthesis fits in the gingival situation of the patient's mouth like a natural tooth, and avoids that the dental implant can be seen from outside. On the other hand this is achieved without a need for trimming by the dental laboratory when preparing the prosthesis, thus further reducing the costs for the prosthesis while improving the quality of the result at the same time.

The abutment post 2 has a portion 13 for receiving the abutment cap 7, and the surface of said portion 13 has a preconditioned surface generally ready for receiving cementum or adhesive for mechanical fixing of the abutment cap 7 to the post 2. This allows reduction of preparation work like blasting to be limited to what is needed for cleaning the post 2. Also the surface of said connecting portion 11 of the cap 7 is a preconditioned surface generally ready for receiving cementum or adhesive for rigid mechanical fixing to the abutment post 2. More further it is preferred that a receiving portion 16 for receiving the veneering 12 a preconditioned surface generally ready for receiving the veneering in a rigid in a mechanical fixing configuration, e.g. by firing.

Fig. 3 shows an abutment set according to the invention with a cap 7 mounted on a post 2. The space between the portion 13 of the post 2 for receiving the abutment cap 7 and the connecting portion 11 of the cap 7 may receive the cementum for mechanically fixing the cap 7 and the post 2 together. Of course, the post 2 is to be mounted onto the implant 1 prior to fixing the cap 7 to the post 2 e.g. by way of a screw 5 not shown in Fig. 3. The embodiment of Fig 3 further shows an alternative arrangement for rotational positioning and fixing of the post 2 to the implant 1. Instead or additionally to a peg 6 there is provided a hexagonal portion 17 for positive fit into a corresponding hexagonal recess of an implant.

Also, Fig. 3 shows an alternative embodiment of a protrusion 10. A defined rotational fixing in impression material is obtained by a non-circular cross section of the protrusion 10 perpendicular to the longitudinal axis 18 of the cap 7. The lateral fixing in impression material applied by a dentist to the abutment cap when taking an impression of the teeth arrangement is obtained by a circumferential groove 19. The groove 19 also forms the basis for removing the protrusion 10 when the cap 7 is removed from the impression for adding the veneering 12 or a crown to the cap 7.

A suitable method for manufacturing a dental prosthesis for mounting on a dental implant may comprise the steps of selecting a set of prefabricated abutment post 2 and abutment cap 7 of appropriate shape with respect to the dental situation of a patient, obtaining an impression of the abutment post 2 and abutment cap 7 removably fixed to the implant 1 within the dental arrangement inside the mouth of the patient, and adding a veneering 12 to the abutment cap 7 without further machining of the abutment cap 7 and the abutment post 2. The method according to the invention further includes the step of removing the abutment cap 7 from the impression, removing the protrusion 10 for rotational and lateral fixing of the abutment cap 7 to the impression, if any, prior to adding the veneering 12 to the abutment cap 7, mounting the abutment post 2 to the dental implant 1 and cementing the abutment cap 7 carrying the veneering 12 to the abutment post 2.

The invention may be put into effect most effectively by treating a human or animal being with a dental prosthesis as described above.

It is evident that the described and other objects are best achieved by a dental prosthesis comprising an implant 1, an abutment post 2 and an abutment cap 7 as well as a veneering 12 or crown or the like according to what is described above.

The description of one or more preferred embodiments shall not be interpreted as a limitation of the scope of protection sought. It is evident that the invention comprises other embodiments and combinations of features described within the scope of the appended claims.

## Claims

1. Abutment set for a dental implant, comprising:
an abutment post (2) for fixing to the dental implant (1), which abutment post (2) is anatomically pre-configured; and
an abutment cap (7), which cap is anatomically pre-configured, and adapted for mounting onto said abutment post (2) without further machining by the customer, wherein the abutment post (2) is adapted for fixing to the dental implant (1) and for receiving said abutment cap (7) without further machining by the customer, and the abutment cap (7) is adapted to receiving a veneering (12);
and the abutment cap (7) and the abutment post (2) being pre-fabricated for providing appropriate dental prostheses for a multiplicity of different patients, **characterized in that** the abutment cap (7) has means (10, 19, 20) for defined rotational and lateral fixing in impression material applied by a dentist,
wherein said means for defined rotational and lateral fixing in impression material comprises at least one protrusion (10), located generally opposite to a connecting portion (11) of the cap (7) for cementing onto the abutment post (2), the protrusion (10) being partially or totally removable by cutting, grinding or breaking prior to receiving the veneering (12).

2. Abutment set according to claim 1, **characterized in that** the anatomically pre-configuration of the cap (7) comprises a bottom rim section (14) surrounding the connecting portion (11), the shape of the rim section (14) being adapted to the natural gingival contour.

3. Abutment set according to any preceding claim, **characterized in that** the abutment post (2) and/or the abutment cap (7) is made of ceramics, preferably a ceramic material comprising zirconium oxide and/or aluminum oxide.

4. Abutment set according to any preceding claim, further **characterized in that** the abutment post (2) has a portion (13) for receiving the abutment cap (7), wherein the surface of said portion (13) having a preconditioned surface generally ready for receiving cementum or adhesive for mechanical fixing of the abutment cap (7).

5. Abutment set according to any preceding claim, **characterized in that** the surface of said connecting portion (11) is a preconditioned surface generally ready for receiving cementum or adhesive for rigid mechanical fixing of the cap (7) to the abutment post (2).

6. Abutment set according to any preceding claim, **characterized in that** the abutment cap (7) has a receiving portion (16) for receiving the veneering (12), wherein the said receiving portion (16) has a preconditioned surface generally ready for receiving the veneering (12) in a rigid mechanical fixing configuration.

7. Abutment set according to any of claims 1 to 6, **characterized in that** the abutment cap (7) and the abutment post (2) having functional surface elements for providing a predetermined rotational orientation relative to each other.

8. Method for manufacturing a dental prosthesis for mounting on a dental implant, comprising the steps of:
selecting a set of pre-fabricated abutment post (2) and abutment cap (7),
obtaining an impression of the abutment post (2) and abutment cap (7) removably fixed to said implant (1) within the dental arrangement inside the mouth of the patient, and
adding a veneering (12) to the abutment cap (7) without further machining of the abutment cap (7) and the abutment post (2) for mounting said abutment cap (7) to said abutment post (2),
wherein the selection step is selecting an abutment post (2) and an abutment cap (7) according to any of claims 1 to 7.

9. Method according to claim 8, further including the step of removing the abutment cap (7) from the impression, partially or totally removing a protrusion (10) for rotational and lateral fixing of the abutment cap (7) to the impression, if any, prior to adding the veneering (12) to the abutment cap (7).

## Patentansprüche

1. Aufbauset für ein Dentalimplantat, umfassend:
einen Aufbaupfosten (2) zum Befestigen an dem Dentalimplantat (1), wobei der Aufbaupfosten (2) anatomisch vorgeformt ist, und
eine Aufbaukappe (7), die anatomisch vorgeformt und angepasst ist zur Befestigung auf dem Aufbaupfosten (2) ohne weitere spanende Bearbeitung durch den Abnehmer, wobei der Aufbaupfosten (2) angepasst ist zur Befestigung an dem Dentalimplantat (1) und zur Aufnahme der Aufbaukappe (7) ohne weitere spanende Bearbeitung durch den Abnehmer, und die Aufbaukappe (7) angepasst ist zur Aufnahme einer Verblendung (12);
und wobei die Aufbaukappe (7) und der Aufbaupfosten (2) vorgefertigt sind zur Bereitstellung geeigneter Dentalprothesen für eine Vielzahl von verschiedenen Patienten, **dadurch gekennzeichnet, dass** die Aufbaukappe (7) Einrichtungen (10, 19, 20) aufweist zur definierten rotatorischen und lateralen Fixierung in Abdruckmaterial, das durch einen Zahnarzt aufgebracht wird, wobei die Einrichtungen zur definierten rotatorischen und lateralen Fixierung in Abdruckmaterial wenigstens einen Vorsprung (10) umfassen, der im Wesentlichen gegenüber eines Verbindungsabschnittes (11) der Kappe (7) zum Zementieren auf den Aufbaupfosten (2) angeordnet ist, wobei der Vorsprung (10) ganz oder teilweise entfernbar ist durch Trennen, Schleifen oder Abbrechen vor dem Aufbringen der Verblendung (12).

2. Aufbauset nach Anspruch 1, **dadurch gekennzeichnet, dass** die anatomische Vorformung der Kappe (7) einen unteren Randabschnitt (14) umfasst, der den Verbindungsabschnitt (11) umgibt, wobei die Form des Randabschnitts (14) angepasst ist an die natürliche Kontur des Zahnfleisches.

3. Aufbauset nach einem der vorhergehenden Ansprüche, **dadurch gekennzeichnet, dass** der Aufbaupfosten (2) und/oder die Aufbaukappe (7) aus einer Keramik hergestellt ist, vorzugsweise einem Keramikmaterial enthaltend Zirkonoxid und/oder Aluminiumoxid.

4. Aufbauset nach einem der vorhergehenden Ansprüche, ferner **dadurch gekennzeichnet, dass** der Aufbaupfosten (2) einen Abschnitt (13) zur Aufnahme der Aufbaukappe (7) aufweist, wobei die Oberfläche des Abschnitts (13) mit einer vorbehandelten Oberfläche im Wesentlichen fertig zur Aufnahme von Zement oder Klebstoff zur mechanischen Befestigung der Aufbaukappe (7) versehen ist.

5. Aufbausetz nach einem der vorhergehenden Ansprüche, **dadurch gekennzeichnet, dass** die Oberfläche des Verbindungsabschnitts (11) eine vorbehandelte Oberfläche im Wesentlichen fertig zur Aufnahme von Zement oder Klebstoff zur stabilen mechanischen Befestigung der Kappe (7) auf dem Aufbaupfosten (2) ist.

6. Aufbauset nach einem der vorhergehenden Ansprüche, **dadurch gekennzeichnet, dass** die Aufbaukappe (7) einen Aufnahmeabschnitt (16) zur Aufnahme der Verblendung (12) aufweist, wobei der Aufnahmeabschnitt (16) eine vorbehandelte Oberfläche im Wesentlichen fertig zur Aufnahme der Verblendung (12) in stabiler mechanischer Befestigung umfasst.

7. Aufbauset nach einem der Ansprüche 1 bis 6, **dadurch gekennzeichnet, dass** die Aufbaukappe (7) und der Aufbaupfosten (2) funktionale Oberflächenelemente aufweisen zur Bereitstellung einer vorbestimmten rotatorischen Orientierung zwischen diesen.

8. Verfahren zur Herstellung einer Dentalprothese zur Befestigung auf einem Dentalimplantat, umfassend folgende Schritte:
Auswählen eines Sets aus vorgefertigten Aufbaupfosten (2) und Aufbaukappe (7), Gewinnen eines Abdrucks des Aufbaupfostens (2) und der Aufbaukappe (7), die abnehmbar an dem Implantat (1) innerhalb der Zahnanordnung im Mund des Patienten befestigt sind, und
Aufbringen einer Verblendung (12) an der Aufbaukappe (7) ohne weitere spanende Bearbeitung der Aufbaukappe (7) und des Aufbaupfostens (2) zur Befestigung der Aufbaukappe (7) an dem Aufbaupfosten (2), wobei der Auswahlschritt das Auswählen eines Aufbaupfostens (2) und einer Aufbaukappe (7) nach einem der Ansprüche 1 bis 7 ist.

9. Verfahren nach Anspruch 8, ferner umfassend den Schritt des Entfernens der Aufbaukappe (7) von dem Abdruck, ganzes oder teilweises Entfernen eines Vorsprunges (10) zur rotatorischen und lateralen Fixierung der Aufbaukappe (7) an dem Abdruck, falls vorhanden, vor dem Aufbringen der Verblendung (12) an der Aufbaukappe (7).

## Revendications

1. Ensemble de pilier pour un implant dentaire, comprenant :
un tenon de pilier (2) destiné à se fixer sur l'implant dentaire (1), lequel tenon (2) est préconfiguré du point de vue anatomique; et
un capuchon de pilier (7), lequel capuchon est préconfiguré du point de vue anatomique, et adapté pour être monté sur ledit tenon de pilier (2) sans usinage supplémentaire par le client, dans lequel le tenon de pilier (2) est adapté pour se fixer à l'implant dentaire (1) et pour recevoir ledit capuchon de pilier (7) sans usinage supplémentaire par le client, et le capuchon de pilier (7) est adapté pour recevoir une facette prothétique (12);
et le capuchon de pilier (7) et le tenon de pilier (2) étant préfabriqués pour fournir des prothèses dentaires appropriées pour une multiplicité de patients différents, **caractérisé en ce que** le capuchon de pilier (7) a des moyens (10, 19. 20) pour la fixation rotative et latérale définie dans le matériau d'empreinte appliqué par un dentiste, dans lequel lesdits moyens pour la fixation rotative et latérale définie dans le matériau d'empreinte comprennent au moins une saillie (10), positionnée généralement à l'opposé d'une partie de raccordement (11) du capuchon (7) pour se coller sur le tenon de pilier (2), la saillie (10) étant partiellement ou totalement amovible par découpe, meulage ou fracture avant de recevoir la facette prothétique (12).

2. Ensemble de pilier selon la revendication 1, **caractérisé en ce que** la pré-configuration anatomique du capuchon (7) comprend une section de rebord inférieure (14) entourant la partie de raccordement (11), la forme de la section de rebord (14) étant adaptée au contour gingival naturel.

3. Ensemble de pilier selon l'une quelconque des revendications précédentes, **caractérisé en ce que** le tenon de pilier (2) et/ou le capuchon de pilier (7) est réalisé avec de la céramique, de préférence un matériau en céramique comprenant de l'oxyde de zirconium et/ou de l'oxyde d'aluminium.

4. Ensemble de pilier selon l'une quelconque des revendications précédentes, **caractérisé en outre en ce que** le tenon de pilier (2) a une partie (13) pour recevoir le capuchon de pilier (7), dans lequel la surface de ladite partie (13) ayant une surface pré-conditionnée généralement prête pour recevoir du ciment ou une colle pour la fixation mécanique du capuchon de pilier (7).

5. Ensemble de pilier selon l'une quelconque des revendications précédentes, **caractérisé en ce que** la surface de ladite partie de raccordement (11) est une surface pré-conditionnée généralement prête pour recevoir du ciment ou de la colle pour la fixation mécanique rigide du capuchon (7) sur le tenon de pilier (2).

6. Ensemble de pilier selon l'une quelconque des revendications précédentes, **caractérisé en ce que** le capuchon de pilier (7) a une partie de réception (16) pour recevoir la facette prothétique (12), dans lequel ladite partie de réception (16) a une surface pré-conditionnée généralement prête pour recevoir la facette prothétique (12) dans une configuration de fixation mécanique rigide.

7. Ensemble de pilier selon l'une quelconque des revendications 1 à 6, **caractérisé en ce que** le capuchon de pilier (7) et le tenon de pilier (2) ont des éléments de surface fonctionnels pour fournir une orientation de rotation prédéterminée les uns par rapport aux autres.

8. Procédé pour fabriquer une prothèse dentaire destinée à être montée sur un implant dentaire, comprenant les étapes consistant à :
sélectionner un ensemble de tenon de pilier (2) et de capuchon de pilier (7) préfabriqués,
obtenir une empreinte du tenon de pilier (2) et du capuchon de pilier (7) fixés de manière amovible sur ledit implant (1) à l'intérieur de l'agencement dentaire à l'intérieur de la bouche du patient, et
ajouter une facette prothétique (12) sur le capuchon de pilier (7) sans usiner davantage le capuchon de pilier (7) et le tenon de pilier (2) pour monter ledit capuchon de pilier (7) sur ledit tenon de pilier (2),
dans lequel l'étape de sélection consiste à sélectionner un tenon de pilier (2) et un capuchon de pilier (7) selon l'une quelconque des revendications 1 à 7.

9. Procédé selon la revendication 8, comprenant en outre l'étape consistant à retirer le capuchon de pilier (7) de l'empreinte, en retirant partiellement ou totalement une saillie (10) pour la fixation rotative et latérale du capuchon de pilier (7) de l'empreinte, s'il y en a, avant d'ajouter la facette prothétique (12) au capuchon de pilier (7).
